# EUROPEAN PATENT APPLICATION

(11) **EP 4 454 737 A1**
(43) Date of publication of application: **30.10.2024**
(21) Application number: 22911600.9
(22) Date of filing: 03.11.2022
(51) Int. Cl.: B01D 61/46, C02F 1/469

(54) **ELECTRODIALYSIS DEVICE AND FEEDING TRAY OF ELECTRODIALYSIS DEVICE**

(30) Priority: 21.12.2021 KR 20210184019
(71) Applicant: POSCO Co., Ltd, Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: PARK, Kwang Soo, Ulsan 44706 (KR)
(74) Representative: Nederlandsch Octrooibureau
(86) International application number: PCT/KR2022/017156
(87) International publication number: WO 2023/120962

(57) **Abstract**

Provided is an electrodialysis including: a plurality of gaskets stacked in one direction and having different solutions respectively flowing therethrough; a plurality of ion exchange membranes respectively disposed between the plurality of gaskets; and a feeding tray disposed at the plurality of gaskets in one direction and supplying the different solutions respectively to the plurality of gaskets, wherein the feeding tray includes a central module overlapping the plurality of gaskets in the one direction; and an upper module coupled to an upper portion of the central module, and including a plurality of discharge channels which communicate with the plurality of gaskets and through which the different solutions passed through the plurality of gaskets are discharged.

## Description

### [Technical Field]

The present disclosure relates to an electrodialysis and a feeding tray of an electrodialysis.

### [Background Art]

An electrodialysis may refer to a device in which cation exchange membranes and anion exchange membranes are arranged alternately, a direct current voltage flows across these membranes, and cations or anions in inlet water (or raw water) then move through each ion exchange membrane, thereby alternately generating and discharging treated water including desalinated water and concentrated liquid from a cell.

A feeding tray included in the electrodialysis may refer to a device supplying, to the electrodialysis, a solution requiring ion exchange separation by performing electrodialysis.

The feeding tray included in a conventional electrodialysis may have an integrated structure in which a plurality of layers are stacked to form a channel through which the solution flows.

The feeding tray of the conventional electrodialysis may have the integrated structure, and a user may thus have to replace the entire feeding tray when some of the channels are deformed by heat.

### [Disclosure]

### [Technical Problem]

The present disclosure attempts to provide an electrodialysis and a feeding tray of an electrodialysis, in which even when a channel of the feeding tray through which a solution flows is partially deformed, only the deformed part of the feeding tray may be replaced with no need to replace the entire feeding tray.

The present disclosure also attempts to provide an electrodialysis and a feeding tray of an electrodialysis, in which a partial area of a channel of the feeding tray through which a solution flows may be changed considering a feature of the solution.

### [Technical Solution]

According to an embodiment, provided is an electrodialysis including: a plurality of gaskets stacked in one direction and having different solutions respectively flowing therethrough; a plurality of ion exchange membranes respectively disposed between the plurality of gaskets; and a feeding tray disposed at the plurality of gaskets in one direction and supplying the different solutions respectively to the plurality of gaskets, wherein the feeding tray includes a central module overlapping the plurality of gaskets in the one direction; and an upper module coupled to an upper portion of the central module, and including a plurality of discharge channels which communicate with the plurality of gaskets and through which the different solutions passed through the plurality of gaskets are discharged.

The plurality of discharge channels may include a plurality of first through-holes directly communicating with the plurality of gaskets, and a plurality of first channels directly connected to the plurality of first through-holes.

The upper module may include a material different from that of the central module.

The upper module may overlap none of the plurality of gaskets in the one direction.

The feeding tray may further include a lower module coupled to a lower portion of the central module.

The lower module may include a plurality of supply channels which communicate with the plurality of gaskets and through which the different solutions are supplied to the plurality of gaskets.

The plurality of supply channels may include a plurality of second through-holes directly communicating with the plurality of gaskets, and a plurality of second channels directly connected to the plurality of second through-holes.

The lower module may include a material different from that of the central module.

The lower module may overlap none of the plurality of gaskets in the one direction.

Each area of the plurality of supply channels may be different from each area of the plurality of discharge channels.

Each area of the plurality of supply channels may be larger than each area of the plurality of discharge channels.

The electrodialysis may further include two electrodes spaced apart from each other while having the plurality of gaskets interposed therebetween.

According to an embodiment, provided is a feeding tray of an electrodialysis which includes a plurality of gaskets stacked in one direction and having different solutions respectively flowing therethrough, a plurality of ion exchange membranes respectively disposed between the plurality of gaskets, and a feeding tray disposed at the plurality of gaskets in one direction and supplying the different solutions respectively to the plurality of gaskets, the tray including: a central module overlapping the plurality of gaskets in one direction; and an upper module coupled to an upper portion of the central module, and including a plurality of discharge channels which communicate with the plurality of gaskets and through which the different solutions passed through the plurality of gaskets are discharged.

The tray may further include a lower module coupled to a lower portion of the central module.

The lower module may include a plurality of supply channels which communicate with the plurality of gaskets and through which the different solutions are supplied to the plurality of gaskets.

### [Advantageous Effects]

According to an embodiment, the present disclosure may provide the electrodialysis and the feeding tray of an electrodialysis, in which even when the channel of the feeding tray through which the solution flows is partially deformed, only the deformed part of the feeding tray may be replaced with no need to replace the entire feeding tray.

The present disclosure may also provide the electrodialysis and the feeding tray of an electrodialysis, in which a partial area of the channel of the feeding tray through which the solution flows may be changed considering the feature of the solution, thereby securing the improved productivity.

### [Description of the Drawings]

FIG. 1 is a diagram schematically showing an electrodialysis according to an embodiment.
FIG. 2 is a plan view showing a feeding tray included in an electrodialysis according to an embodiment.
FIGS. 3A to 3D are diagrams showing the discharge channels and module supply channels of the feeding tray included in an electrodialysis according to an embodiment.
FIG. 4 is an image for explaining an effect of the electrodialysis according to an embodiment.
FIG. 5 is a plan view showing a feeding tray of an electrodialysis according to another embodiment.
FIGS. 6A and 6B are images for explaining an effect of the feeding tray of an electrodialysis according to another embodiment.

### [Mode for Invention]

Hereinafter, embodiments of the present disclosure are described in detail with reference to the accompanying drawings so that those skilled in the art to which the present disclosure pertains may easily practice the present disclosure. The present disclosure may be implemented in various different forms and is not limited to the embodiments provided herein.

A portion unrelated to the description is omitted in order to obviously describe the present disclosure, and the same or similar components are denoted by the same reference numeral throughout the specification.

In addition, throughout the specification, unless described to the contrary, "including" any component is to be understood to imply the inclusion of other elements rather than the exclusion of other elements.

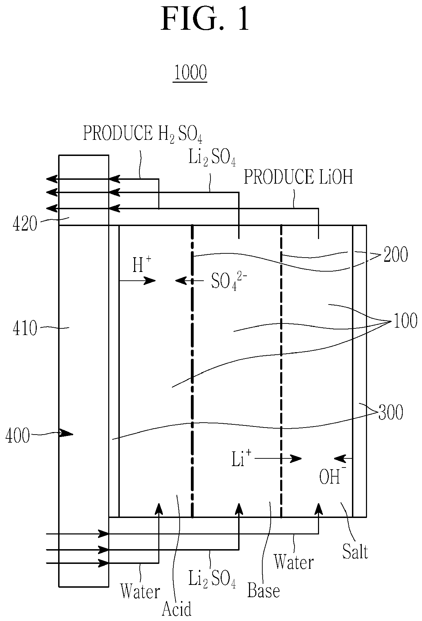

Hereinafter, the description describes an electrodialysis according to an embodiment with reference to FIGS. 1 to 4.

FIG. 1 is a diagram schematically showing an electrodialysis according to an embodiment.

Referring to FIG. 1, an electrodialysis 1000 according to an embodiment may include a plurality of gaskets 100, a plurality of ion exchange membranes 200, two electrodes 300, and a feeding tray 400.

The plurality of gaskets 100 may be stacked in one direction (or a horizontal direction in FIG. 1). Different solutions may respectively flow through the plurality of gaskets 100. For example, the plurality of gaskets 100 shown in FIG. 1 may have a left gasket providing an acid channel through which water (H₂O) flows, a right gasket providing a salt channel through which water (H₂O) flows, and a middle gasket providing a base channel through which lithium sulfate (Li₂SO₄) flows, and are not limited thereto.

The plurality of ion exchange membranes 200 may respectively be disposed between the plurality of gaskets 100. The plurality of ion exchange membranes 200 may be selectively permeable to ions. For example, an anion exchange membrane disposed on the right side of the plurality of ion exchange membranes 200 shown in FIG. 1 may allow SO₄²⁻ ions from lithium sulfate flowing through the middle gasket providing the base channel to permeate into water (H₂O) flowing through the left gasket providing the acid channel. The SO₄²⁻ ions permeating into water flowing through the left gasket may react with H⁺ hydrolyzed by the electrode 300 to thus produce sulfuric acid (H₂SO₄). In addition, a cation exchange membrane disposed on the left side of the plurality of ion exchange membranes 200 shown in FIG. 1 may permeate Li⁺ ions from lithium sulfate flowing through the middle gasket providing the base channel into water (H₂O) flowing through the right gasket providing the salt channel. The Li⁺ ions permeating into water flowing through the right gasket may react with OH⁻hydrolyzed by the electrode 300 to thus produce lithium hydroxide (LiOH).

The two electrodes 300 may be spaced apart from each other while having the plurality of gaskets 100 interposed therebetween, and supply different direct current voltages. The two electrodes 300 may include various known bipolar membranes, and are not limited thereto. In addition, FIG. 1 shows that the two electrodes 300 are disposed between the plurality of gaskets 100 and the feeding tray 400. However, the electrodes 300 are not limited thereto, and may be spaced apart from each other while having the feeding tray 400 and the plurality of gaskets 100 interposed therebetween.

The feeding tray 400 may be disposed at the plurality of gaskets 100 in one direction. The feeding tray 400 may supply the different solution respectively to the plurality of gaskets 100. For example, the feeding tray 400 may have a plurality of layers stacked to provide a supply channel and a discharge channel through which each of the different solutions flows. In addition, the feeding tray 400 may supply water (H₂O) through the supply channel to the left gasket providing the acid channel among the plurality of gaskets 100, discharge sulfuric acid (H₂SO₄), produced from the left gasket by performing electrodialysis, through the discharge channel, supply lithium sulfate (Li₂SO₄) through the supply channel to the middle gasket providing the base channel, discharge lithium sulfate (Li₂SO₄) that is used in performing the electrodialysis from the middle gasket through the discharge channel, supply water (H₂O) through the supply channel to the right gasket providing the salt channel, and discharge lithium hydroxide (LiOH), produced by from the right gasket performing the electrodialysis, through the discharge channel.

Meanwhile, in another embodiment, the different solutions supplied to the plurality of gaskets 100 by the feeding tray 400 may be various known different solutions used in various known electrodialysis.

The feeding tray 400 may have a modular structure in which two modules are not integrated with each other but coupled to each other in a vertical direction, which is the other direction that intersects one direction. The feeding tray 400 may include a central module 410 overlapping the plurality of gaskets 100 and the plurality of ion exchange membranes 200 in one direction, i.e., horizontal direction, and an upper module 420 coupled to an upper portion of the central module 410 and overlapping none of the plurality of gaskets 100 and the plurality of ion exchange membranes 200 in one direction, i.e., horizontal direction. The upper module 420 may overlap none of the plurality of gaskets 100, thus easily replacing the upper module 420 coupled to the central module 410.

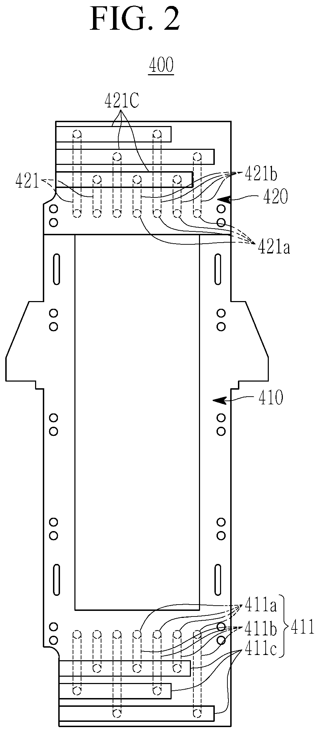

FIG. 2 is a plan view showing the feeding tray included in the electrodialysis according to an embodiment.

Referring to FIG. 2 together with FIG. 1, the central module 410 of the feeding tray 400 may include a plurality of module supply channels 411 which communicate with the plurality of gaskets 100 and through which the different solutions are supplied to the plurality of gaskets 100. The plurality of module supply channels 411 may include a plurality of module through-holes 411a directly communicating with the plurality of gaskets 100, a plurality of module channels 411b directly connected to the plurality of module through-holes 411a and disposed inside the central module 410, and a plurality of module supply units 411c directly connected to the plurality of module channels 411b and disposed outside the central module 410. External solutions may be supplied through the module supply units 411c.

The upper module 420 of the feeding tray 400 may be coupled to the upper portion of the central module 410. The upper module 420 may be coupled to the upper portion of the central module 410 by using various known coupling means. The upper module 420 may include a plurality of discharge channels 421 which communicates with the plurality of gaskets 100 and through which the different solutions passed through the plurality of gaskets 100 are discharged. The plurality of discharge channels 421 may include a plurality of first through-holes 421a directly communicating with the plurality of gaskets 100, a plurality of first channels 421b directly connected to the plurality of first through-holes 421a and disposed inside the upper module 420, and a plurality of discharge units 421c directly connected to the plurality of first channels 421b and disposed outside the upper module 420.

The upper module 420 may include a material different from that of the central module 410. For example, the upper module 420 may include a polymer material having higher acid and alkali resistance than that of the central module 410. In addition, the upper module 420 may include a polymer material having higher heat resistance than that of the central module 410.

The upper module 420 may include the material different from that of the central module 410, thus suppressing deformation of the upper module 420 by acidity, alkalinity, and heat of the solution passing through the discharge channels 421.

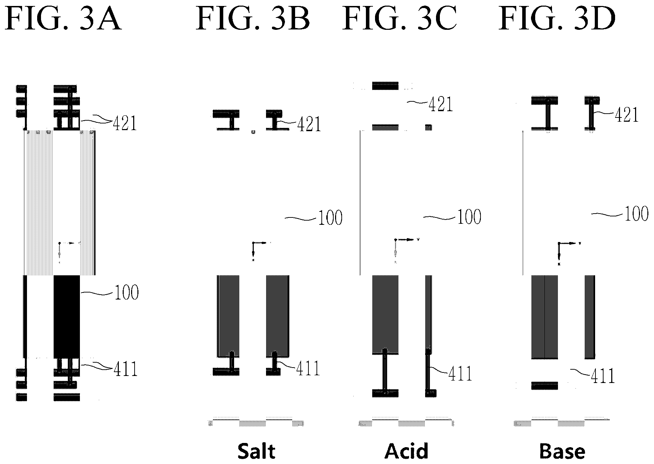

FIGS. 3A to 3D are diagrams showing the discharge channels and module supply channels of the feeding tray included in the electrodialysis according to an embodiment. FIG. 3A is a diagram showing the discharge channels and the module supply channels of the feeding tray, FIG. 3B is a diagram showing the discharge channels and the module supply channels that provide the salt channel, FIG. 3C is a diagram showing the discharge channels and the module supply channels that provide the acid channel, and FIG. 3D is a diagram showing the discharge channels and the module supply channels that provide the base channel.

Referring to FIGS. 3A to 3D, water (H₂O) may be supplied through the module supply channel 411 of the feeding tray to the gasket 100 providing the acid channel, sulfuric acid (Li₂SO₄) produced from the gasket 100 by performing the electrodialysis may be discharged through the discharge channel 421 of the feeding tray, lithium sulfate (Li₂SO₄) may be supplied through the module supply channel 411 to the gasket 100 providing the base channel, lithium sulfate (Li₂SO₄) used in electrodialysis may be discharged from the gasket 100 through the discharge channel 421, water (H₂O) may be supplied through the module supply channel 411 to the gasket 100 providing the salt channel, and lithium hydroxide (LiOH) produced from the gasket 100 by performing electrodialysis may be discharged through the discharge channel 421.

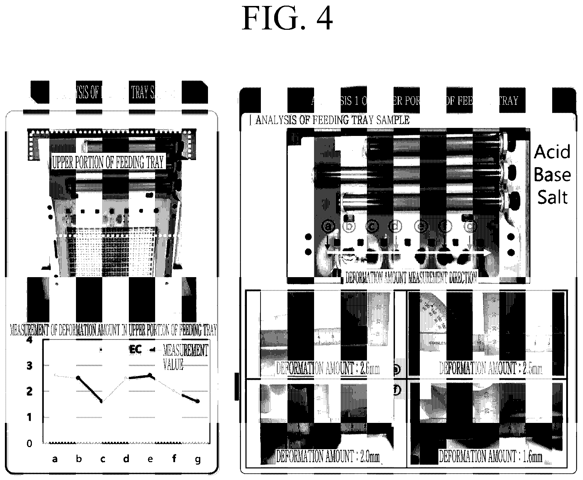

FIG. 4 is an image for explaining an effect of the electrodialysis according to an embodiment.

Referring to FIG. 4, the electrodialysis may use a high current and a high voltage. A supplied power may operate through the electrodes in a sequence where the electrode solutions are ion-exchanged through the ion exchange membranes and then discharged. In the electrodialysis according to an embodiment, electrodialysis-type ion exchanges may be performed using gravity to the maximum extent possible in the different solutions supplied to the plurality of gaskets through the module supply channel disposed at a lower portion of the central module of the feeding tray, and then the solutions may be discharged to the feeding tray through the discharge channel of the upper module. Therefore, the electrodialysis according to an embodiment may have a vertical structure in which the solution is supplied from the lower portion and the solution where the electrodialysis is completely performed is overflows from the upper portion to be discharged. Therefore, the lower portion of the feeding tray may have a moderate temperature due to new solutions continuously supplied thereto. However, the upper portion of the feeding tray, which includes a material such as polyvinyl chloride (PVC), may be easily deformed due to heat accumulated thereon. Here, the reason why the polymer material such as PVC is used as the material for the feeding tray is that PVC has excellent chemical resistance to acids and alkalis. Therefore, most of the electrodialysis feeding trays may use the polymer material such as PVC. As shown in the image of FIG. 4, it is confirmed that the discharge channels of the upper portion are deformed due to the high temperature as a result of disassembling the upper portion of the feeding tray currently in use. The discharge channels disposed at the upper portion of the feeding tray may be deformed by heat. As a result, an alignment of the channels included in the discharge channels may become misaligned, which may cause lower productivity.

On the other hand, referring to FIG. 2 together with FIG. 1, the electrodialysis 1000 according to an embodiment may have the modular structure in which the two modules, i.e., upper module 420 and central module 410, are coupled to each other in the vertical direction, which is the other direction intersecting the feeding tray 400 in one direction. Therefore, even when the discharge channel 421 included in the upper module 420 is deformed by heat, it is possible to separate only the upper module 420 from the central module 410 and replace the same with no need to replace the entire feeding tray 400, thereby reducing parts costs through partial replacement of the feeding tray 400.

That is, the present disclosure may provide the electrodialysis 1000 and the feeding tray 400 of the electrodialysis 1000 which may lower maintenance costs by replacing only the upper module 420, which is a deformed part of the feeding tray 400, with no need to replace the entire feeding tray 400 even when the discharge channel 421, which is a part of the channel of the feeding tray 400 through which the solution flows, is deformed by heat.

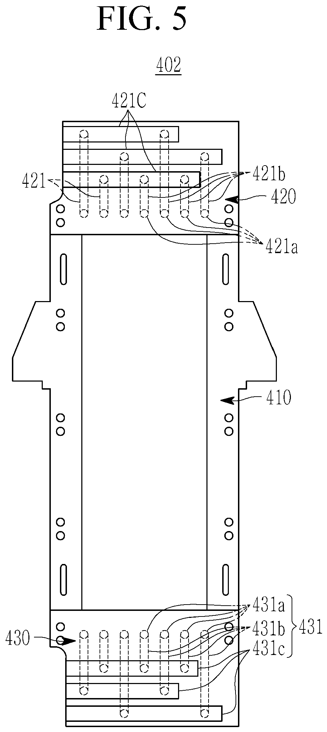

Hereinafter, the description describes an electrodialysis according to another embodiment with reference to FIGS. 5 to 6B. Hereinafter, the description describes differences from the above-described embodiment.

FIG. 5 is a plan view showing a feeding tray of an electrodialysis according to another embodiment.

Referring to FIG. 5, a feeding tray 402 of an electrodialysis according to another embodiment may have a modular structure in which three modules are not integrated with one another but coupled to one another in the vertical direction, which is the other direction intersecting one direction. The feeding tray 402 may include the central module 410 overlapping the plurality of gaskets and the plurality of ion exchange membranes in one direction, i.e., horizontal direction, the upper module 420 coupled to the upper portion of the central module 410 and overlapping none of the plurality of gaskets and the plurality of ion exchange membranes in the horizontal direction, and a lower module 430 coupled to the lower portion of the central module 410 and overlapping none of the plurality of gaskets and the plurality of ion exchange membranes in the horizontal direction. The upper module 420 or the lower module 430 may overlap none of the plurality of gaskets 100, and the upper module 420 or the lower module 430, coupled to the central module 410, may thus be easily replaced.

The lower module 430 of the feeding tray 402 may be coupled to the lower portion of the central module 410. The lower module 430 may be coupled to the lower portion of the central module 410 by using the various known coupling means. The lower module 430 of the feeding tray 402 may include a plurality of supply channels 431 which communicate with the plurality of gaskets and through which the different solutions are supplied to the plurality of gaskets. The plurality of supply channels 431 may include a plurality of second through-holes 431a directly communicating with the plurality of gaskets, a plurality of second channels 431b directly connected to the plurality of second through-holes 431a and disposed inside the lower module 430, and a plurality of supply units 431c directly connected to the plurality of second channels 431b and disposed outside the lower module 430. The external solutions may be supplied to the plurality of supply channels 431 through the plurality of supply units 431c.

The upper module 420 of the feeding tray 402 may be coupled to the upper portion of the central module 410. The upper module 420 may include a plurality of discharge channels 421 which communicates with the plurality of gaskets and through which the different solutions passed through the plurality of gaskets are discharged. The plurality of discharge channels 421 may include the plurality of first through-holes 421a directly communicating with the plurality of gaskets, the plurality of first channels 421b directly connected to the plurality of first through-holes 421a and disposed inside the upper module 420, and the plurality of discharge units 421c directly connected to the plurality of first channels 421b and disposed outside the upper module 420. The solutions in the feeding tray 402 may be discharged to the outside through the plurality of discharge units 421c.

The upper module 420 may include the material different from that of the central module 410. For example, the upper module 420 may include the polymer material having the higher acid and alkali resistance than that of the central module 410. In addition, the upper module 420 may include the polymer material having the higher heat resistance than that of the central module 410.

The upper module 420 may include the material different from that of the central module 410, thus suppressing the deformation of the upper module 420 by the acidity, alkalinity, and heat of the solution passing through the discharge channels 421.

The lower module 430 may include a material different from that of the central module 410. For example, the lower module 430 may include the polymer material having the higher acid and alkali resistance than that of the central module 410. In addition, the lower module 430 may include a polymer material having higher heat resistance and impact resistance than that of the central module 410.

The lower module 430 may include the material different from that of the central module 410, thus suppressing deformation of lower module 430 by the acidity, alkalinity, and heat of the solution passing through the supply channels 431.

Each area of the supply channels 431 included in the lower module 430 may be different from each area of the discharge channels 421 included in the upper module 420. Each area of the supply channels 431 in the lower module 430 may larger than each area of the discharge channels 421 in the upper module 420.

The area of the supply channel 431 in the lower module 430 may be larger than the area of the discharge channel 421 in the upper module 420. In this way, the channel supplied to the gasket may be expanded through the supply channel 431 to thus minimize turbulence occurring in the solution moving to the gasket through the supply channel 431, thereby improving a speed uniformity of the solution moving from the supply channel 431 to the gasket, which results in improved productivity of the electrodialysis.

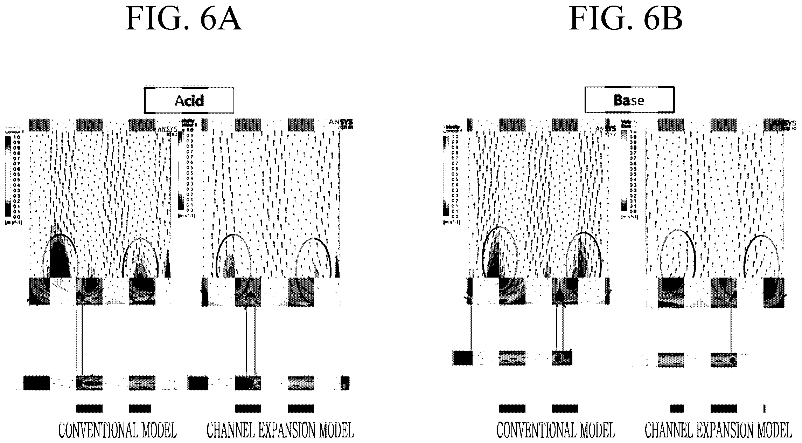

FIGS. 6A and 6B are images for explaining an effect of the feeding tray of an electrodialysis according to another embodiment. FIG. 6A is an image of a flow analysis showing the speed distribution and vector of the solution flowing through an acid channel of a conventional model or that of a channel expansion model, and FIG. 6B is an image of a flow analysis showing the speed distribution and vector of the solution flowing through a base channel of the conventional model or that of the channel expansion model.

Referring to FIGS. 6A and 6B, it may be seen that as shown in a flow analysis result, in a conventional feeding tray, which is the conventional model, a flow rate of the solution supplied to the gasket forms a flow field based on electrodialysis performance of the membrane, thus having a negative influence on the electrolysis performance. The conventional feeding tray manufactured to have the integrated structure is unable to easily change the area of the supply channel, which results in a contradiction in having to control production only by changing an input flow rate of the solution. An ion exchange capacity, which indicates the electrodialysis performance, may depend on types of the ion exchange membrane and solutions, and the flow rate of the solution provided here may also be continuously changed. It is thus necessary to customize a supply channel size modularization to suit the ion exchange capacity predicted through an experiment.

The feeding tray of an electrodialysis according to another embodiment, which is the channel expansion model, may reduce the parts costs through the partial replacement by replacing the upper module in response to the thermal deformation of the upper module, and simultaneously secure the improved productivity through the partial replacement by replacing the lower module having the changed area of the supply channel to adjust a flow amount based on the ion exchange performance of the ion exchange membrane.

The feeding tray and the electrodialysis including the feeding tray according to another embodiment may secure the easy replacement in case of a failure and minimize the flow field of the solution based on the ion exchange ability.

That is, the present disclosure may provide the electrodialysis 1000 and the feeding tray 402 of the electrodialysis 1000 which may lower the maintenance costs by replacing only the upper module 420, which is a deformed part of the feeding tray 402, with no need to replace the entire feeding tray 402 even when the discharge channel 421, which is a part of the channel in the feeding tray 402 through which the solution flows, is deformed by heat, and simultaneously secure the improved productivity by replacing the lower module 430, which is a part of the feeding tray 402 having the changed area of the supply channel 431, which is a part of the channel in the feeding tray 402.

Although the embodiments of the present disclosure have been described in detail hereinabove, the scope of the present disclosure is not limited thereto, and may include various modifications and alterations made by those skilled in the art and using a basic concept of the present disclosure as defined in the claims.

### [Description of symbols]

gasket 100, ion exchange membrane 200, feeding tray 400, central module 410, upper module 420, lower module 430

## Claims

1. An electrodialysis comprising:
a plurality of gaskets stacked in one direction and having different solutions respectively flowing therethrough;
a plurality of ion exchange membranes respectively disposed between the plurality of gaskets; and
a feeding tray disposed at the plurality of gaskets in one direction and supplying the different solutions respectively to the plurality of gaskets,
wherein the feeding tray includes
a central module overlapping the plurality of gaskets in the one direction; and
an upper module coupled to an upper portion of the central module, and including a plurality of discharge channels which communicate with the plurality of gaskets and through which the different solutions passed through the plurality of gaskets are discharged.

2. The electrodialysis of claim 1, wherein
the plurality of discharge channels include
a plurality of first through-holes directly communicating with the plurality of gaskets, and
a plurality of first channels directly connected to the plurality of first through-holes.

3. The electrodialysis of claim 1, wherein
the upper module includes a material different from that of the central module.

4. The electrodialysis of claim 1, wherein
the upper module overlaps none of the plurality of gaskets in the one direction.

5. The electrodialysis of claim 1, wherein
the feeding tray further includes a lower module coupled to a lower portion of the central module.

6. The electrodialysis of claim 5, wherein
the lower module includes a plurality of supply channels which communicate with the plurality of gaskets and through which the different solutions are supplied to the plurality of gaskets.

7. The electrodialysis of claim 6, wherein
the plurality of supply channels include
a plurality of second through-holes directly communicating with the plurality of gaskets, and
a plurality of second channels directly connected to the plurality of second through-holes.

8. The electrodialysis of claim 5, wherein
the lower module includes a material different from that of the central module.

9. The electrodialysis of claim 5, wherein
the lower module overlaps none of the plurality of gaskets in the one direction.

10. The electrodialysis of claim 5, wherein
each area of the plurality of supply channels is different from each area of the plurality of discharge channels.

11. The electrodialysis of claim 10, wherein
each area of the plurality of supply channels is larger than each area of the plurality of discharge channels.

12. The electrodialysis of claim 1, further comprising
two electrodes spaced apart from each other while having the plurality of gaskets interposed therebetween.

13. A feeding tray of an electrodialysis which includes a plurality of gaskets stacked in one direction and having different solutions respectively flowing therethrough, a plurality of ion exchange membranes respectively disposed between the plurality of gaskets, and a feeding tray disposed at the plurality of gaskets in one direction and supplying the different solutions respectively to the plurality of gaskets, the tray comprising:
a central module overlapping the plurality of gaskets in one direction; and
an upper module coupled to an upper portion of the central module, and including a plurality of discharge channels which communicate with the plurality of gaskets and through which the different solutions passed through the plurality of gaskets are discharged.

14. The tray of claim 13, further comprising
a lower module coupled to a lower portion of the central module.

15. The tray of claim 14, wherein
the lower module includes a plurality of supply channels which communicate with the plurality of gaskets and through which the different solutions are supplied to the plurality of gaskets.
